# EUROPÄISCHE PATENTSCHRIFT

(11) **EP 0 777 853 B1**
(45) Veröffentlichungstag und Bekanntmachung des Hinweises auf die Patenterteilung: **01.03.2000**
(21) Anmeldenummer: 95930371.0
(22) Anmeldetag: 24.08.1995
(51) Int. Cl.: G01J 9/02, G01B 9/02, G01J 3/453

(54) **VORRICHTUNG ZUR DURCHFÜHRUNG SPEKTROSKOPISCHER MESSUNGEN**
DEVICE FOR CARRYING OUT SPECTROSCOPIC MEASUREMENTS
DISPOSITIF DE REALISATION DE MESURES SPECTROSCOPIQUES

(30) Priorität: 24.08.1994 DE 4431412
(43) Veröffentlichungstag der Anmeldung: 11.06.1997
(73) Patentinhaber: Newton, William, 30165 Hannover (DE)
(72) Erfinder: Newton, William, 30165 Hannover (DE)
(74) Vertreter: Brümmerstedt, Hans Dietrich, Dipl.-Ing.
(86) Internationale Anmeldenummer: DE9501130
(87) Internationale Veröffentlichungsnummer: WO9606335

(56) Entgegenhaltungen:
- US-A- 3 282 148
- US-A- 4 444 501
- US-A- 4 822 998
- US-A- 5 151 585
- US-A- 5 166 755
- US-A- 5 167 444
- US-A- 5 305 233
- IBM TECHNICAL DISCLOSURE BULLETIN, Bd.32, Nr.8A, 1990, IBM CORP. Seiten 409 - 410 'wavelength division chip'
- IBM TECHNICAL DISCLOSURE BULLETIN, Bd.22, Nr.2, 1979, IBM CORP. Seiten 701 - 702 A.W. CROX, JR. 'multiple beam interferometer'

## Beschreibung

Die Erfindung betrifft eine Vorrichtung zur Durchführung spektroskopischer Messungen nach dem interferometrischen Prinzip mit einer Matrix von Fotodetektoren.

Der heutige Stand der Spektroskopie beinhaltet Verfahren nach dem dispersiven und dem interferometrischen Prinzip.

Bei dem dispersiven Verfahren werden verschiedene Dispersionsmittel wie Prismen, Beugungsgitter (geritzt oder holographisch geätzt) und in manchen Fällen Keilfilter eingesetzt. Das Kernstück bei diesem Verfahren ist ein Spektrograph oder ein Monochromator. Ein Spektrograph ist so konzipiert, daß der gesamte zu messende Wellenlängenbereich in einem Schritt erfaßt und am Ausgang das komplette Spektrum dargestellt wird. Das Spektrum wird mit einem Fotofilm, einem Vidikon, einem Reticon oder einem CCD (charge coupled device) registriert. Bei dem Monochromomator wird Licht bei jeweils nur einer Wellenlänge dem Ausgang zugeführt. Um ein Spektrum aufzunehmen, wird das Prisma oder das Reflexionsgitter gedreht, so daß zeitlich hintereinander alle Wellenlängen durchgelassen werden. Zur Registrierung wird üblicherweise eine Fotodiode, ein Fotomultiplier oder ein Bolometer eingesetzt.

Beim Interferenzverfahren wird oft ein Michelson-Interferometer verwendet, bei dem das zu messende Licht durch zwei teildurchlässige Spiegel geleitet und der Abstand der Spiegel zueinander verändert wird, um alle Wellenlängen durchzufahren. Die Registrierung des Lichts am Ausgang erfolgt mittels einer Fotodiode. Der resultierende Zeitverlauf des Ausgangssignals der Fotodiode wird anschließend einer Fourier-, Hadamard- oder dergleichen Transformation unterworfen, um das Spektrum zu erhalten.

Ein modifiziertes Michelson-Interferometer ist in WO 85/03122 offenbart, welches ohne einen bewegten Spiegel auskommt. Das wird dadurch erreicht, daß einer der Spiegel gekippt ist, wodurch ein zweidimensionales Interferenzmuster erzeugt wird. Dieses Interferenzmuster wird mittels einer Fotodetektor-Matrix ausgelesen.

Aus der DE 39 28 001 A1 ist ein Mehrstrahl-Interferometer zur Wegmessung mit einer monochromatischen Lichtquelle sowie einem feststehenden und einem beweglichen Spiegel bekannt. Einer der beiden Spiegel weist ein Stufenprofil auf.

Monochromatoren, Spektrographen und Interferometer sind in der Regel groß, teuer, schwer und beinhalten meistens mechanisch zu bewegende Teile, was immer hinsichtlich der Genauigkeit Probleme bringt. Der Wirkungsgrad von dispersiven Elementen ist ausserdem sehr stark von der Wellenlänge abhängig.

Aus US-A-4,822,998 ist ein Spektralsensor bekannt, der ein stufenartig aufgebautes Interferenzfilter aufweist, das aus einer Vielzahl von in Form einer rechteckigen Matrix angeordneten Interferometern mit jeweils zwei für Licht teildurchlässigen parallelen Spiegeln besteht. Die Spiegel der verschiedenen Interferometer haben dabei unterschiedliche Abstände. Dieser Spektralsensor weist weiterhin eine Matrix von Phototodetektoren auf, wobei jedem Interferometer ein Photodetektor zugeordnet ist.

Der Erfindung liegt die Aufgabe zugrunde, eine Meßvorrichtung der eingangs genannten Art zu schaffen, die sich durch verbesserte spektralmeßtechnische Eigenschaften durch geringes Gewicht und durch kleine Abmessungen auszeichnet und die eine hohe Zuverlässigkeit auch über einen längeren Zeitraum hinweg und über einen breiten Temperaturbereich gewährleistet, und die darüber hinaus unempfindliche für selbst starke mechanische Erschütterungen ist.

Die gestellte Aufgabe wird erfindungsgemäß mittels einer Vorrichtung mit den Merkmalen des Anspruchs 1 oder des Anspruchs 2 gelöst.

Bei der Ausführungsform gemäß Anspruch 1 ist es zweckmäßig, wenn die Stufenhöhe auf der einen Scheibe um einen Faktor größer ist als die Stufenhöhe auf der anderen Scheibe, der gleich der Anzahl der Stufen auf der anderen Scheibe ist. In diesem Falle würden sich - auf beiden Scheiben konstante Stufenhöhen vorausgesetzt - zeilenweise bzw. reihenweise betrachtet, von Interferometer zu Interferometer gleiche Abstandssprünge ohne Lücken zwischen den Zeilen bzw. Reihen ergeben. Eine derartige Ausführung erleichtert die Auswertung erheblich.

Die Ausführungsform gemäß Anspruch 2 unterscheidet sich von der gemäß Anspruch 1 dadurch, daß die Vielzahl von Interferometern durch zwei parallel zueinander angeordnete Scheiben gebildet ist, wobei beide Seiten der ersten Scheibe sowie die nach außen weisende Scheibe der zweiten Scheibe eben ausgebildet sind, während die andere, der ersten Scheibe zugekehrte Seite der zweiten Scheibe mit Stufen gleicher Höhe zwischen einer Schmalseite und der gegenüberliegenden Schmalseite versehen ist, die zeilenweise derart angeordnet sind, daß der letzten Stufe einer Zeile an einer Schmalseite die erste Stufe der nächsten Zeile an der anderen Schmalseite folgt.

Es sind also bei den Vorrichtungen gemäß Anspruch 1 und Anspruch 2 nur zwei Teile vorhanden, um alle Interferometer zu bilden, wobei alle Wellenlängen in einem Durchlauf erfaßt werden. Das Gewicht der Vorrichtung ist gering, was für alle Fälle von Vorteil ist, wo es auf das Gewicht ankommt, z. B. bei Flugzeugen, Sateliten, mobilen Meßstationen usw. Auch das räumliche Volumen ist kleiner als bei herkömmlichen Spektrographen gleicher Leistung. Da keine beweglichen Teile erforderlich sind, ist die Lebensdauer des Systems und seine Zuverlässigkeit wesentlich höher als bei bekannten Vorrichtungen. Auch die Erschütterungsempfindlichkeit und die Temperaturabhängigkeit ist wesentlich geringer als bei bekannten Vorrichtungen.

Vorzugsweise bestehen die Scheiben aus Glas, Quarz oder Polymethylmethacrylat, wobei die nach außen weisenden Seiten der Scheiben mit einer Antireflexionsbeschichtung versehen sind und die einander zugekehrten Seiten der Scheiben derart beschichtet sind, daß sie für das zu messende Licht einen teildurchlässigen Spiegel bilden. Es ist zweckmäßig, wenn der Abstandssprung zwischen den Stufen höchstens eine Viertelwellenlänge des kurzwelligsten zu messenden Lichtes beträgt.

Bei einer praktischen Ausführungsform sind 100 x 100 Interferometer in einer quadratischen Matrix angeordnet, wobei die Matrix der Interferometer eine Gesamtabmessung von 10 x 10 mm hat.

Es kann zweckmäßig sein, zwischen der Matrix der Interferometer und der Matrix der Fotodetektoren einen Bildverstärker anzuordnen. Dieser erlaubt eine zusätzliche Verstärkung des Lichts. Durch passende Wahl des Bildverstärkers ist eine Zeitauflösung im Nanosekunden-Bereich erreichbar.

Die Erfindung wird nachfolgend anhand von in der Zeichnung dargestellten Ausführungsbeispielen näher erläutert. In der Zeichnung stellen dar:
- Fig. 1: eine Ausführungsform einer erfindungsgemäßen Vorrichtung in schematischer Darstellung mit zwei die Matrix von Interferometern bildenden Scheiben, einem Bildverstärker und einer Matrix von Fotode tektoren;
- Fig. 1a: eine Draufsicht auf die Vorrichtung nach Fig. 1,
- Fig. 1b: eine Einzelheit A nach Fig. 1a,
- Fig. 2a: die Scheiben von Fig. 1 in Seitenansicht,
- Fig. 2b: die Scheiben von Fig. 2a in Draufsicht,
- Fig. 3: eine andere Ausführungsform einer erfindungsgemäßen Vorrichtung, und
- Fig. 3a: eine Einzelheit B nach Fig. 3.

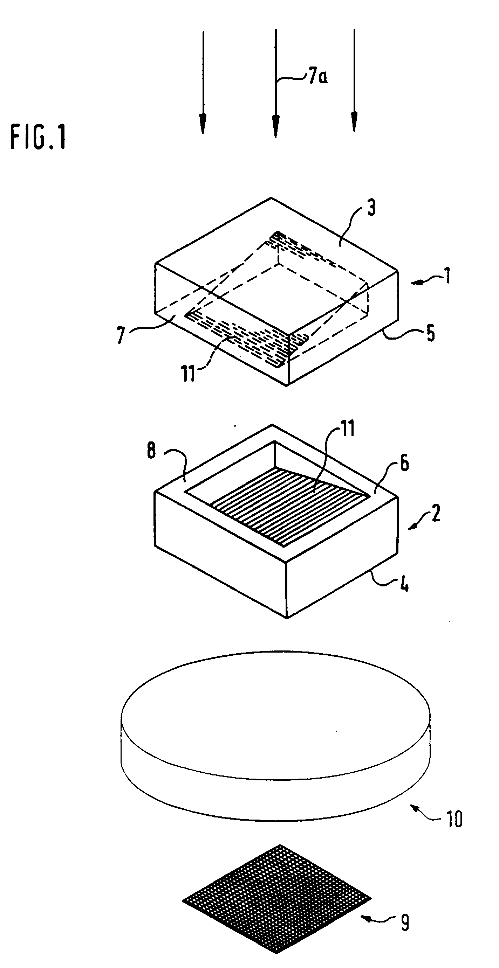

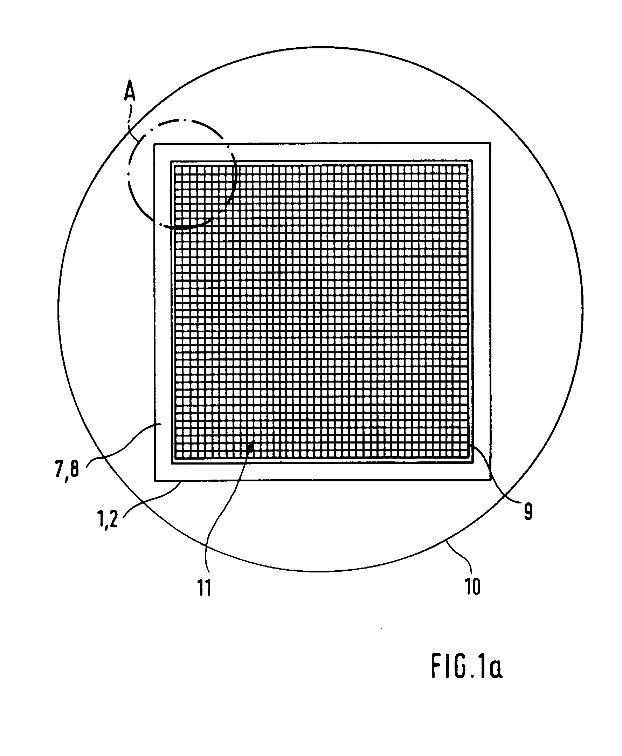

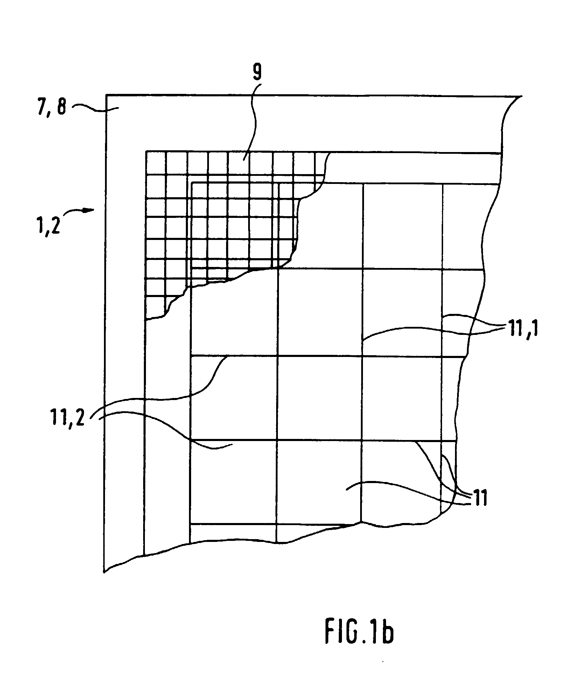

Anstatt ein Michelson-Interferometer zu verwenden und dies zeitlich abzufahren, beruht die Erfindung auf einer zweidimensionalen Matrix von vielen Interferometern. Eine solche Anordnung ist in Fig. 1 dargestellt. Dort sind zwei Scheiben 1 und 2 vorgesehen, die parallel zueinander angeordnet sind und aufeinander liegen, wobei die nach außen weisenden Seiten 3 und 4 eben sind, während die einander zugekehrten Seiten 5 und 6 innerhalb eines Randes 7, 8 stufenförmig abfallen. Zur Verdeutlichung sind die Scheiben 1, 2 in Explosionsdarstellung gezeigt. Die Stufen 11 jeder Scheibe haben Abstandssprünge gleicher Größe, jedoch sind die Abstandssprünge auf einer Scheibe größer als auf der anderen, und zwar um einen Faktor, der gleich der Anzahl der Stufen 11 in der anderen Scheibe ist, wobei die Scheiben 1 und 2 so aufeinander liegend angeordnet sind, daß die Stufen der Scheiben 1 und 2 senkrecht zueiander verlaufen. Die einander zugekehrten Seiten der Scheiben 1 und 2 sind so verspiegelt, daß die Scheiben 1, 2 für das zu messende Licht teildurchlässig sind. Durch die senkrecht zueinander verlaufende Anordnung der Stufen 11 werden somit Interferometer gebildet, die alle erforderlichen Abstandabmessungen beinhalten, um ein komplettes Interferogramm darzustellen. Somit hat jedes Interferometer seine eigene, konstante Verzögerung. Das zu analysierende Licht 7a wird kollimiert senkrecht auf die Interferometer-Matrix gerichtet. Hinter der Matrix von Interferometern befindet sich, gegebenenfalls unter Zwischenschaltung eines Bildverstärkers 10, eine analoge Matrix 9 von Fotodetektoren, z. B. eine Matrix von CCD-Detektoren oder CID-Detektoren. Nach der gewünschten Belichtungszeit wird die Detektormatrix ausgelesen. Mittels einer Fourier-, einer Hadamard-, oder einer ähnlichen Transformation wird das Spektrum dargestellt.

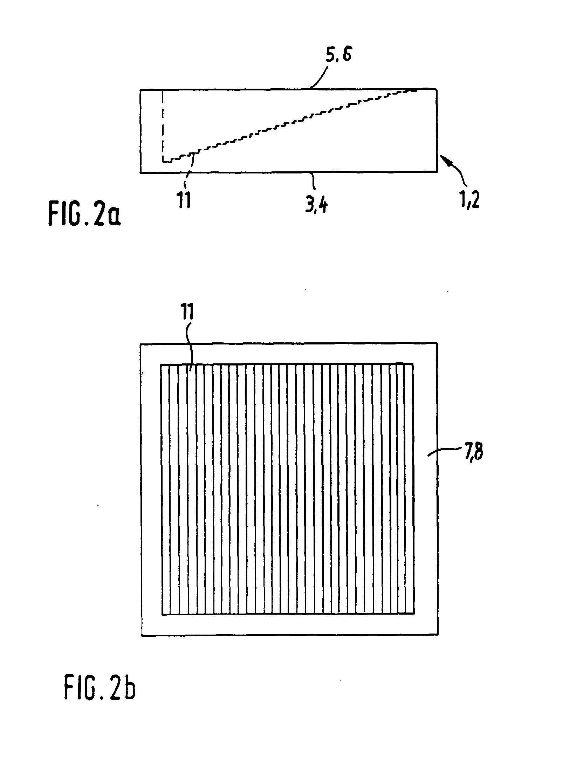

In diesem Ausführungsbeispiel ist die Anordnung der einzelnen Interferometer so gewählt, daß von einem Interferometer zum anderen eine steigende Verzögerung erfolgt. Die Verzögerungssprünge sind gleich und betragen höchstens eine Viertelwellenlänge des kurzwelligsten zu messenden Lichtes. Wenn z. B. Licht bei 400 nm erfaßt werden soll, betragen die Sprünge 100 nm oder weniger. Die erreichbare spektrale Auflösung wird durch die Anzahl von Interferometern gegeben. Bei 10 000 Interferometern mit je 100 nm Unterschied in der Verzögerung ergibt sich eine Auflösung von 0,08 nm. Diese 10 000 Interferometer können in einer Matrix von 100 x 100 angeordnet sein. Wie Fig. 2 andeutet, sind in der Scheibe 1 und ebenso in der Scheibe 2 einhundert Stufen vorgesehen, die einen gleichen Abstandssprung von 0,1 bzw. 10 µm haben, wobei die Abmessungen des mit Stufen versehenen Teils der Scheiben 10 mm x 10 mm und die Dicke im Stufenbreich ca. 1 mm bzw. 10 µm betragen. Zur Registrierung wäre eine quadratische CCD-Detektoran-ordnung (z. B. TH 7895 M von Thomson-CF) geeignet.

Die Interferometer sind als Fabry-Perot-Interferometer aufgebaut. Die Scheiben sind dabei so aufeinander angeordnet, daß die beiden teilreflektierenden Oberflächen einander gegenüberstehen.

Zwischen der Interferometer-Matrix und der Detektor-Matrix kann auch ein Bildverstärker 10 montiert werden, der eine zusätzliche Verstärkung des Lichts erlaubt. Durch passende Wahl eines Bildverstärkers 10 läßt sich eine Zeitauflösung im Nanosekunden-bereich erreichen.

Licht, das auf einen ersten Spiegel in der Vielzahl von Interferometern fällt, wird teilweise durchgelassen und fällt danach auf den zweiten Spiegel. Da dieser auch nur teildurchlässig ist, wird ein Teil des Lichtes reflektiert. Es trifft dann auf den ersten Spiegel. Durch diese abwechselnden Reflexionen des Lichts kommt eine Interferenzerscheinung zustande. Wenn also das Licht, das beim ersten Durchlauf auf den zweiten Spiegel fällt, in Phase mit dem Licht ist, das beim zweiten Durchlauf auf den zweiten Spiegel fällt, verstärken sich die beiden Teilstrahlen. Falls die beiden Teilstrahlen in Antiphase sind, löschen sie sich gegenseitig aus. Die Phase hängt von der Wellenlänge des Lichts und von dem Abstand zwischen den beiden Spiegeln ab. Im Gegensatz zu den herkömmlichen FTIR (Fourier-Transform-Infrared) Spektrometern beinhaltet die erfindungsgemäße Vorrichtung viele Interferometer mit jeweils konstanten, aber unterschiedlichen Verzögerungen. Hierdurch wird erreicht, daß von einem einzigen Lichtblitz viele Verzögerungen bei allen Wellenlängen erfaßt werden können. Nach Auslesen der Detektor-Matrix kann mittels einer schnellen Fouriertransformation (oder dergleichen) das Spektrum rekonstruiert werden.

Da es in der Matrix viele Interferometer gibt, ist es sinnvoll, die einzelnen Interferometer zu kennzeichnen. Sie alle unterscheiden sich voneinander durch zwei Merkmale: den Abstand zwischen den beiden teildurchlässigen Spiegeln sowie deren Positionen in der Matrix. Daher können die Koordinaten der Matrix als Kennung für die einzelnen Interferometer dienen.

Es ist sinnvoll, die Koordinaten so zu verwenden, daß eine dreistellige Zahl je Richtung jedes einzelne Interferometer identifiziert. Das erste Interferometer in der ersten Zeile hat daher die Koordinaten 000,000. Das zweite Interferometer in der ersten Zeile hat die Koordinaten 000, 001. Das erste Interferometer in der zweiten Zeile hat die Koordinaten 001,000. In einer 100 x 100 Matrix hat das letzte Interferometer die Koordinaten 099,099.

Wenn die Matrix 100 x 100 Interferometer aufweist, um Licht ab 400 nm Wellenlänge zu messen, sind die einzelnen Schritte 100 nm oder weniger. Falls der Abstand bei dem Interferometer 000,000 auf 0 nm gesetzt wird, was bedeutet, daß die beiden Spiegel in Kontakt miteinander sind, und die beiden Scheiben 1 und 2 eine Stufenhöhe von 0,1 µm bzw. 10 µm haben, so hätten dann folgende Interferometer folgender Abstände (oder weniger): 000,001 - 0,1 µm, 000,099 - 9,9 µm, 001,000 - 10 µm, 001,099 - 19,9 µm, 002,000 - 20 µm, 099,099 - 999,9 µm. Daraus ergibt sich, daß bei einer derartig aufgebauten Matrix der kleinste Abstand 0,1 µm und der größte Abstand 999,9 µm (0,9999 mm) ist. Diese Matrixanord-nung ist ideal - von Interferometer zu Interferometer liegen gleiche Abstandsprünge vor, es treten keine Lücken auf, d.h., es wird kein Abstandssprung ausgelassen und die unterschiedlichen Abstände sind gleichmäßig zwischen dem kleinsten und größten Abstand verteilt.

Das zu messende Licht fällt senkrecht auf die Matrix. Die Hälfte des Lichtes passiert die Matrix und fällt senkrecht auf die zweidimensionale Fotodetektormatrix (CCD) 9. Nach der Belichtung wird die CCD-Matrix ausgelesen. Der Auslesevorgang bei der CCD-Matrix erfolgt sequentiell. Das heißt, daß die einzelnen Pixel in einer Zeile der Fotodetektoranordnung zeitlich hinter einander ausgelesen werden. Das Ergebnis bedeutet, daß die Pixel in der genauen Reihenfolge ausgelesen werden können, die den Koordinaten der Interferometer entspricht. Daher lassen sich die Signale aus den Pixeln den Interferometern sehr leicht zuordnen.

Beispielsweise bei einer Belichtung mit monochromatischem Licht der Wellenlänge 800 nm würde die Reihe von Signalen eine Periodizität aufweisen. In dem hier verwendeten numerischen Beispiel wäre die Periode jeweils 8 Interferometer groß. Die Periode allgemein errechnet sich aus dem Verhältnis Wellenlänge/Abstandsschritt. Die Amplitude ist proportional der Lichtintensität. Bei nicht monochromatischem Licht wäre die Periodizität schwer zu erkennen. Wenn jedoch die gesamten Signale einer Fourier-, Walsh-, Hadamard- oder ähnlichen Transformationen unterworfen werden, ist das Endresultat das Amplitudenspektrum des Lichtes.

Rein meßtechnisch gesehen sind auch deutliche Vorteile zu erreichen. Die spektroskopische Auflösung ist höher als bei einem herkömmlichen Spektrographen, das Streulichtverhalten wird mit der erfindungsgemäßen Vorrichtung deutlich verbessert, und das Spektralansprechen ist viel gleichmäßiger. Die gesammelte (und gemessene) Lichtmenge liegt bei ca. 30 %, während diese bei einem herkömmlichen Spektrographen je nach Wellenlänge zwischen einem Wert von 0,1 % und 60 % liegt. Ein weiterer Vorteil der Vorrichtung besteht darin, daß sie nahezu unabhängig von der Polarisation des zu messenden Lichtes ist.

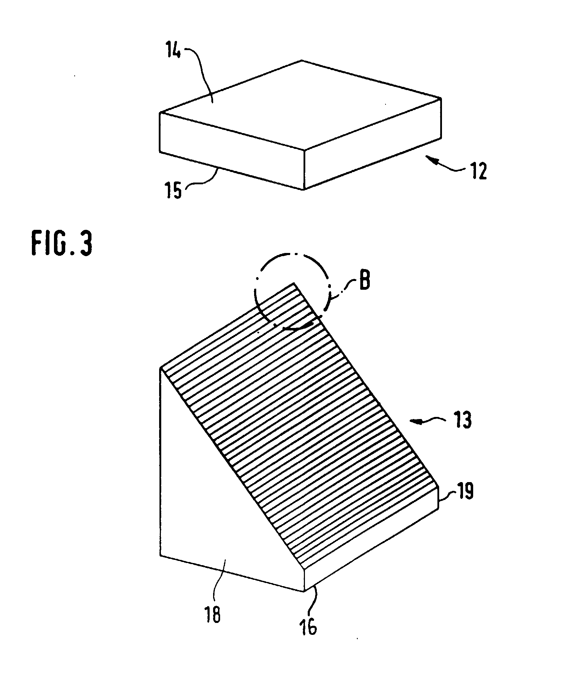

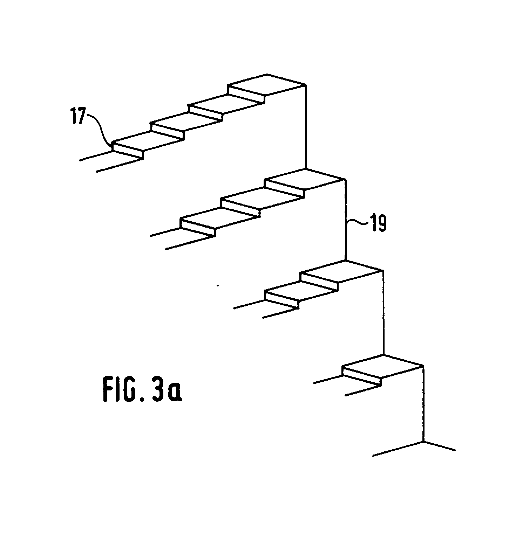

Bei dem in Fig. 3 dargestellten Ausführungsbeispiel sind nur die beiden Scheiben 12 und 13 der Interferometer-Matrix dargestellt, wobei die Scheibe 13 aus Gründen der Verdeutlichung nicht maßstabsgetreu dargestellt ist. Bei diesem Ausführungsbeispiel sind die beiden Seiten 14 und 15 der Scheibe 12 eben und sämtliche Stufen 17 sind in die Scheibe 13 verlegt deren nach außen weisende Seite 16 eben ist. Die Stufen 17, die der ebenen Seite 15 der Scheibe 12 zugekehrt sind, sind zeilenweise zwischen der Schmalseite 18 und der dieser gegenüberliegenden Schmalseite 19 angeordnet, wobei die Abstandssprünge von Stufe zu Stufe wie bei dem Ausführungsbeispiel von Fig. 1 und 2 gleich ist. Die Anordnung ist dabei so getroffen, daß der letzten Stufe 17 einer Zeile an der Schmalseite 18 die erste Stufe 17 der nächsten Zeile an der Schmalseite 19 folgt. Die einander zugekehrten Flächen der Scheiben 12 und 13 sind verspiegelt und teildurchlässig, so daß jede der Stufen 17 mit der Seite 15 ein Interferometer bildet. Die Oberseiten der Stufe 17 haben beispielsweise Abmessungen von 0,1 x 0,1 mm, wobei 100 Stufen pro Zeile und 100 Zeilen vorgesehen sind, so daß wie bei dem Ausführungsbeispiel von Fig. 1 und Fig. 2 10 000 Interferometer vorhanden sind und die Scheibe 13 im Stufenbereich Abmessungen von 10 x 10 mm hat, wobei die Dicke der Scheibe im Stufenbereich nur 1 mm beträgt. Die Registrierung des durchgelassenen Lichtes erfolgt wie bei Fig. 1 und 2 durch eine nicht dargestellte Matrix von Fotodetektoren.

Die vorstehend beschriebenen Ausführungsbeispiele geben ideale Verhältnisse wieder. Bei der Herstellung der sehr kleinen Stufungen, um beim Ausführungsbeispiel zu bleiben, könnte es Schwierigkeiten geben, oder es müßten für die Stufungen 100 nm und 10 µm verschiedene Herstellungstechniken angewendet werden. Diese Schwierigkeiten könnten umgangen werden, indem für beide Scheiben 1, 2 beinahe gleiche Stufenhöhen, z. B. 10 µm und 10,097 µm, vorgesehen werden. Auch eine derartige Matrix würde die Merkmale des Anspruchs 1 erfüllen.

Wahrscheinlich nicht zu vermeidende Herstellungstoleranzen sind ebenfalls nicht schädlich, da die Interferometermatrix ohnehin ausgemessen werden muß. Hier würde man dann eine Tabelle der tatsächlichen Abstände zwischen den Spiegelpaaren erstellen, die für die Rekonstruktion des Spektrums aus dem Interferogramm erforderlich ist.

Es sei bemerkt, daß die im Zuge der Beschreibung der Erfindung angegebenen Angaben zur Anzahl und zu den Abmessungen der Interferometer nur beispielsweise genannt sind, und daß diesbezüglich auch andere Anordnungen möglich sind, die auf verschiedene spezifische Anwendungen abgestimmt sind.

## Patentansprüche

1. Vorrichtung zur Durchführung spektroskopischer Messungen nach dem interferometrischen Prinzip mit einer Matrix (9) von Fotodetektoren, wobei eine Vielzahl von Interferometern vorgesehen ist, die aus jeweils zwei für Licht teildurchlässigen parallelen Spiegeln bestehen und in Form einer rechteckigen Matrix so angeordnet sind, daß die Spiegel aller Interferometer einen unterschiedlichen Abstand voneinander haben, derart, daß für jede beliebige zu messende Wellenlänge viele verschiedene Reflexionsphasenlagen in der Matrix zu verzeichnen sind, und daß die unterschiedlichen Abstände im Bereich zwischen dem kleinsten und dem größten Abstand gleichmäßig verteilt sind, und daß hinter den Interferometern die Matrix (9) von Fotodetektoren so angeordnet ist, daß jedem Interferometer mindestens ein Fotodetektor zum Empfang des zu messenden, senkrecht auf die Interferometer auftreffenden Lichts (7a) zugeordnet ist, und daß zur Darstellung des Spektrums eine Einrichtung zur Transformation der Ausgangssignale der Matrix (9) von Fotodetektoren vorgesehen ist, wobei die Vielzahl von Interferometern durch zwei parallel zueinander angeordnete Scheiben (1, 2) gebildet ist, deren voneinander abgewandte Seiten (3, 4) eben ausgebildet sind, während ihre einander zugewandten Seiten (5, 6) treppenartig angeordnete Stufen (11) gleicher Höhe aufweisen, wobei die Stufenhöhe der einen Scheibe (1, 2) von der Stufenhöhe der anderen Scheibe (1, 2) abweicht, und daß die beiden Scheiben (1, 2) so aufeinander liegen, daß die Stufen (11) der einen Scheibe (1, 2) senkrecht zu den Stufen (11) der anderen Scheibe (1, 2) verlaufen.

2. Vorrichtung zur Durchführung spektroskopischer Messungen nach dem interferometrischen Prinzip mit einer Matrix (9) von Fotodetektoren, wobei eine Vielzahl von Interferometern vorgesehen ist, die aus jeweils zwei für Licht teildurchlässigen parallelen Spiegeln bestehen und in Form einer rechteckigen Matrix so angeordnet sind, daß die Spiegel aller Interferometer einen unterschiedlichen Abstand voneinander haben, derart, daß für jede beliebige zu messende Wellenlänge viele verschiedene Reflexionsphasenlagen in der Matrix zu verzeichnen sind, und daß die unterschiedlichen Abstände im Bereich zwischen dem kleinsten und dem größten Abstand gleichmäßig verteilt sind, und daß hinter den Interferometern die Matrix (9) von Fotodetektoren so angeordnet ist, daß jedem Interferometer mindestens ein Fotodetektor zum Empfang des zu messenden, senkrecht auf die Interferometer auftreffenden Lichts (7a) zugeordnet ist, und daß zur Darstellung des Spektrums eine Einrichtung zur Transformation der Ausgangssignale der Matrix (9) von Fotodetektoren vorgesehen ist, wobei die Vielzahl von Interferometern durch zwei parallel zueinander angeordnete Scheiben (12, 13) gebildet ist, und beide Seiten (14, 15) der ersten Scheibe (12) sowie die nach außen weisende Seite (16) der zweiten Scheibe (13) eben ausgebildet sind, während die andere, der ersten Scheibe (12) zugekehrte Seite der zweiten Scheibe (13) mit Stufen (17) gleicher Höhe zwischen einer Schmalseite (18) und der gegenüberliegenden Schmalseite (19) versehen ist, die zeilenweise derart angeordnet sind, daß der letzten Stufe (17) einer Zeile an einer Schmalseite (18) die erste Stufe (17) der nächsten Zeile an der anderen Schmalseite (19) folgt.

3. Vorrichtung nach Anspruch 1, dadurch gekennzeichnet, daß die Stufenhöhe auf der einen Scheibe (1, 2) um einen Faktor größer ist als die Stufenhöhe auf der anderen Scheibe (1, 2), der gleich der Anzahl der Stufen (11) auf der anderen Scheibe (1, 2) ist.

4. Vorrichtung nach einem der vorstehenden Ansprüche 1 bis 3, dadurch gekennzeichnet, daß die Scheiben (1, 2, 12, 13) aus Glas, Quarz oder Polymethylmethacrylat bestehen.

5. Vorrichtung nach Anspruch 4, dadurch gekennzeichnet, daß die einander zugekehrten Seiten der Scheiben (1, 2, 12, 13) derart verspiegelt sind, daß sie für das zu messende Licht einen teildurchlässigen Spiegel bilden.

6. Vorrichtung nach einem der vorstehenden Ansprüche, dadurch gekennzeichnet, daß 100 x 100 Interferometer in einer quadratischen Matrix angeordnet sind.

7. Vorrichtung nach einem der vorstehenden Ansprüche, dadurch gekennzeichnet, daß zwischen der Matrix der Interferometer und der Matrix (9) der Fotodetektoren ein Bildverstärker (10) angeordnet ist.

## Claims

1. Device for carrying out spectroscopic measurements based on the principle of interferometry with a matrix (9) of photodetectors with a plurality of interferometers being provided which comprise of two parallel mirrors which are partially transparent to light and which are disposed in the form of a rectangular matrix in such a way that the mirrors of all interferometers are at a different distance from each other in such a way that many different reflection phase positions for each wavelength to be measured are to be found in the matrix, that the different distances are distributed evenly in the range between the smallest and the largest distance, that the matrix (9) of photodetectors is disposed in such a way behind the interferometers that at least one photodetector for receiving the light (7a) to be measured which impinges vertically on the interferometers is associated with each interferometer and that for representing the spectrum a device for converting the output signals of the matrix (9) of photodetectors is provided so that the plurality of interferometers is formed by two disks (1, 2) which are disposed parallel to each other with the sides (3, 4) turned away from each other being constructed so that they are level whilst their sides (5, 6) turned towards each other are provided with steps (11) of equal height which are disposed in a manner similar to stairs so that the step height of the one disk (1, 2) differs from the step height of the other disk (1, 2) and that the two disks (1, 2) are arranged on each other in such a way that the steps (11) of the one disk (1, 2) run at right angles to the steps (11) of the other disk (1, 2).

2. Device for carrying out spectroscopic measurements based on the principle of interferometry with a matrix (9) of photodetectors with a plurality of interferometers being provided which comprise of two parallel mirrors which are partially transparent to light and which are disposed in the form of a rectangular matrix in such a way that the mirrors of all interferometers are at a different distance from each other in such a way that many different reflection phase positions for each wavelength to be measured are to be found in the matrix, that the different distances are distributed evenly in the range between the smallest and largest distance, that the matrix (9) of photodetectors is disposed in such a way behind the interferometers that at least one photodetector for receiving the light (7a) to be measured which impinges vertically on the interferometers is associated with each interferometer and that for representing the spectrum a device for converting the output signals of the matrix (9) of photodetectors is provided so that the plurality of interferometers is formed by two disks (12, 13) which are disposed parallel to each other and both sides (14, 15) of the first disk (12) and the side (16) of the second disk (13) turned towards the outside are constructed so that they are level whilst the other side of the second disk (13) turned towards the first disk (12) is provided with steps (17) of equal height between a narrow side (18) and the opposite narrow side (19) which are disposed in lines in such a way that the last step (17) of a line on a narrow side (18) is followed by the first step (17) of the next line on the other narrow side (19).

3. Device according to claim 1, characterized in that the step height on the one disk (1, 2) is greater by a factor than the step height on the other disk (1, 2) which is equal to the number of steps (11) on the other disk (1, 2).

4. Device according to one of the preceding claims 1 to 3, characterized in that the disks (1, 2, 12, 13) consist of glass, quartz or polymethylmethacrylate.

5. Device according to claim 4, characterized in that the sides of the disks (1, 2, 12, 13) turned towards each other reflect are metallized in such a way that they form a partially transparent mirror for the light to be measured.

6. Device according to one of the preceding claims, characterized in that 100 x 100 interferometers are disposed in a square matrix.

7. Device according to one of the preceding claims, characterized in that an image intensifier (10) is disposed between the matrix of the interferometers and the matrix (9) of the photodetectors.

## Revendications

1. Dispositif de réalisation de mesures spectroscopiques d'après le principe d'interférométrie avec une matrice (8) de photodétecteurs, une pluralité d'interféromètres étant prévus qui sont constitués chacun de deux miroirs parallèles partiellement transparents et sont disposés en forme de matrice rectangulaire de façon que les miroirs de tous les interféromètres soient mutuellement séparés par des distances différentes, de sorte que, pour chaque longueur d'onde que l'on veut mesurer, sont à noter différentes relations de phase de réflexion dans la matrice, et que les distances différentes sont réparties aussi uniformément que possible entre la plus petite et la plus grande distances, et que derrière les interféromètres, la matrice (9) de photodétecteurs est disposée de façon qu'à chaque interféromètre est associé un photodétecteur pour la réception de la lumière (7a) à mesurer qui frappe perpendiculairement les interféromètres, et que pour la représentation du spectre est prévu un dispositif pour la transformation du signal de sortie de la matrice (9) de photodétecteurs, la pluralité d'interféromètres est formée par deux plateaux (1, 2) parallèles l'un à l'autre dont les côtés opposés (3, 4) sont réalisés alors que leurs cotés adjacents (5, 6) présentent des degrés (11) disposés comme un escalier et de même hauteur, les hauteurs du premier plateau (1, 2) différent des hauteurs du second (1, 2) et que les deux plateaux (1, 2) sont superposés de façon que les degrés (11) du premier plateau (1, 2) soient perpendiculaires aux degrés (11) du second plateau (1, 2).

2. Dispositif de réalisation de mesures spectroscopiques d'après le principe d'interférométrie avec une matrice (8) de photodétecteurs, une pluralité d'interféromètres étant prévus et qui sont constitués chacun de deux miroirs parallèles partiellement transparents et sont disposés en forme de matrice rectangulaire de façon que les miroirs de tous les interféromètres soient mutuellement séparés par des distances différentes, de sorte que, pour chaque longueur d'onde que l'on veut mesurer, sont à noter différentes relations de phase de réflexion dans la matrice, et que les distances différentes sont réparties aussi uniformément que possible entre la plus petite et la plus grande distances, et que, derrière les interféromètres, la matrice (9) de photodétecteurs est disposée de façon qu'à chaque interféromètre, est associé au moins un photodétecteur pour la réception de la lumière (7a) à mesurer qui frappe perpendiculairement les interféromètres, et que, pour la représentation du spectre, est prévu un dispositif pour la transformation du signal de sortie de la matrice (9) de photodétecteurs, la pluralité d'interféromètres étant formée de deux plateaux (12, 13), parallèles entre eux, deux côtés opposés (14, 15) du premier miroir (12) ainsi que les côtés (16), se présentant vers l'extérieur, du second miroir (3) étant réalisés égaux, tandis que l'autre côté du second miroir (13) tourné vers le premier miroir (12) est prévu avec des degrés (17) de même hauteur entre le côté étroit (18) et le côté étroit opposé (19) qui, ligne à ligne, sont prévus de façon que le dernier degré (17) d'une ligne sur un côté étroit (18) suive le premier degré (17) de la ligne suivante sur l'autre côté étroit (19).

3. Dispositif suivant la revendication 1, caractérisé en ce que la hauteur d'un degré sur le premier miroir (1, 2) est d'un facteur plus grand que la hauteur d'un degré sur l'autre miroir (1, 2) qui est le même nombre de degrés (11) sur l'autre miroir (1, 2).

4. Dispositif suivant l'une des revendications 1, 2 ou 3, caractérisé en ce que les miroirs (1, 2, 12, 13) sont en verre, en quartz ou en polyméthylméthacrylat.

5. Dispositif suivant la revendication 4, caractérisé en ce que les côtés tournés l'un vers l'autre des miroirs (1, 2, 12, 13) sont métallisés de façon à créer un miroir partiellement transparent pour la lumière à mesurer.

6. Dispositif suivant l'une des revendications précédentes, caractérisé en ce qu'on dispose 100 x 100 interféromètres dans une matrice carrée.

7. Dispositif suivant l'une des revendications précédentes, caractérisé en ce qu'entre la matrice des interféromètres et la matrice (9) de photodétecteurs est prévu un amplificateur d'images (10).
